# DEMANDE DE BREVET EUROPEEN

(11) **EP 4 734 565 A1**
(43) Date de publication de la demande: **29.04.2026**
(21) Numéro de dépôt: 25209988.2
(22) Date de dépôt: 21.10.2025
(51) Int. Cl.: H04W 4/40, B60R 25/24, G07C 9/00

(54) **UTILISATION D'IDENTIFIANT PORTATIF AVEC DEUX PROTOCOLES DE COMMUNICATION**

(30) Priorité: 22.10.2024 FR 2411511
(71) Demandeur: Valeo Comfort and Driving Assistance, 94000 Créteil (FR)
(72) Inventeur: FARINE, Herve, 94000 Créteil (FR)
(74) Mandataire: Delplanque, Arnaud

(57) **Abrégé**

On propose un procédé d'utilisation d'un identifiant portatif configuré pour communiquer avec un système de véhicule en utilisant un premier protocole de communication et un deuxième protocole de communication. L'identifiant portatif comprend une source d'énergie électrique. Le procédé comprend une détermination S10 du niveau d'énergie restant dans la source d'énergie électrique. Le procédé comprend une mesure S20 de la température. Le procédé comprend une détection S30 que le niveau d'énergie restant déterminé est inférieur à seuil d'énergie prédéterminé et que la température mesurée est inférieure à un seuil de température prédéterminé, puis, une modification S40 de la communication du premier protocole de communication vers le deuxième protocole de communication. Le deuxième protocole de communication est configuré pour que la tension au borne de la source d'énergie électrique reste supérieure à un seuil de tension prédéterminé. Le procédé améliore l'utilisation de l'identifiant portatif.

## Description

### Domaine technique

La présente divulgation concerne un procédé d'utilisation d'un identifiant portatif communiquant avec un système de véhicule, un programme d'ordinateur pour un tel identifiant portatif, un support de stockage pour un tel programme et un identifiant portatif pour l'exécution d'un tel procédé.

### Arrière-plan technique

Il existe aujourd'hui des véhicules équipés de systèmes ayant enregistré un ou plusieurs identifiants portatifs. Ces identifiants portatifs peuvent être des dispositifs portables tels que des porte-clés (traduction de l'anglais « keyfob ») ou des smartphones. Chaque identifiant portatif comprend une source d'énergie électrique (par exemple une pile) lui permettant d'être portatif. De tels systèmes permettent l'exécution de fonctions par le véhicule, comme par exemple l'ouverture des portes et/ou le démarrage du véhicule en fonction de la localisation du ou des identifiants portatifs.

Pour l'exécution de ces fonctions, chaque identifiant portatif peut être configuré pour communiquer en utilisant un protocole de communication UWB (acronyme de l'anglais « Ultra Wide Band », qui signifie en français « Bande Ultra Large ») avec le système. Ce protocole peut notamment permettre de localiser l'identifiant portatif autours du véhicule grâce à plusieurs échanges UWB successifs entre des ancres du système et l'identifiant portatif. Cependant, ces échanges UWB consomment une quantité importante d'énergie, ce qui peut entraîner des défaillances de localisation lorsque l'énergie disponible dans l'identifiant est insuffisante.

Il existe donc un besoin d'améliorer l'utilisation de ces identifiants portatifs et notamment leur capacité à être localisés par le système.

### Résumé

On propose pour cela un procédé d'utilisation d'un identifiant portatif configuré pour communiquer avec un système de véhicule en utilisant un premier protocole de communication et un deuxième protocole de communication. L'identifiant portatif comprend une source d'énergie électrique. Le procédé comprend une détermination du niveau d'énergie restant dans la source d'énergie électrique. Le procédé comprend une mesure de la température. Le procédé comprend une détection que le niveau d'énergie restant déterminé est inférieur à seuil d'énergie prédéterminé et que la température mesurée est inférieure à un seuil de température prédéterminé. Le procédé comprend, après la détection, une modification de la communication du premier protocole de communication vers le deuxième protocole de communication. Le deuxième protocole de communication est configuré pour que la tension au borne de la source d'énergie électrique reste supérieure à un seuil de tension prédéterminé.

La communication peut comprendre des localisations successives de l'identifiant portatif par rapport au véhicule. Chaque localisation peut comprendre des échanges UWB entre l'identifiant portatif et le système de véhicule. Les localisations peuvent être réalisées, après la modification, en utilisant le deuxième protocole de communication.

Les localisations réalisées en utilisant le deuxième protocole de communication peuvent comprendre moins d'échanges UWB que les localisations réalisées en utilisant le premier protocole de communication.

Le système de véhicule peut comprendre des ancres. Les échanges UWB de chaque localisation peuvent comprendre des réceptions par l'identifiant portatif de signaux envoyés par les ancres du système. Le nombre de signaux réceptionnés de chaque localisation réalisée en utilisant le deuxième protocole de communication peut être inférieur au nombre de signaux réceptionnés de chaque localisation réalisée en utilisant le premier protocole de communication.

L'espacement temporel entre les échanges UWB des localisations réalisées en utilisant le deuxième protocole de communication peut être supérieur à l'espacement temporel entre les échanges UWB des localisations réalisées en utilisant le premier protocole de communication.

Les échanges UWB de chaque localisation peuvent comprendre des émissions de signaux par l'identifiant portatif au système. La puissance des émissions du deuxième protocole peut être inférieure à la puissance des émissions du premier protocole de communication.

L'identifiant portatif et/ou le système peuvent comprendre en outre une mémoire sur laquelle est enregistrée une table de calibration. La table de calibration peut comprendre des paramètres de protocole de communication à appliquer en fonction de seuils de température et d'énergie. Le procédé peut comprendre une détermination des paramètres du deuxième protocole de communication par lecture de la table de calibration.

L'étape de mesure de la température peut être réalisée par l'identifiant portatif ou par le système de véhicule.

On propose également un programme d'ordinateur pour un tel identifiant portatif. Le programme d'ordinateur comprend des instructions qui, lorsque le programme est exécuté par un processeur de l'identifiant portatif, conduisent celui-ci à mettre en œuvre un tel procédé.

On propose également un support de stockage lisible par ordinateur sur lequel est enregistré un tel programme d'ordinateur.

On propose également un identifiant portatif. L'identifiant portatif comprend un tel support de stockage. L'identifiant portatif est configuré pour exécuter un tel procédé.

### Brève description des figures

Des exemples non-limitants vont être décrits en référence aux figures suivantes :
La [Fig. 1] montre un exemple d'organigramme du procédé.
La [Fig. 2] illustre un exemple de système de véhicule et d'identifiant portatif.
Les [Fig. 3] et [Fig. 4] illustrent un exemple d'identifiant portatif.
La [Fig. 5] illustre un exemple de localisation entre un système de véhicule et un identifiant portatif.
Les [Fig. 6] et [Fig. 7] illustrent des exemples de résultats.
Les [Fig. 8], [Fig. 9] et [Fig. 10] illustrent des exemples de localisations réalisées en utilisant le deuxième protocole de communication.
La [Fig. 11] montre un exemple de table de calibration.
Les [Fig. 12] et [Fig. 13] illustrent des exemples d'architecture de l'identifiant portatif.

### Description détaillée

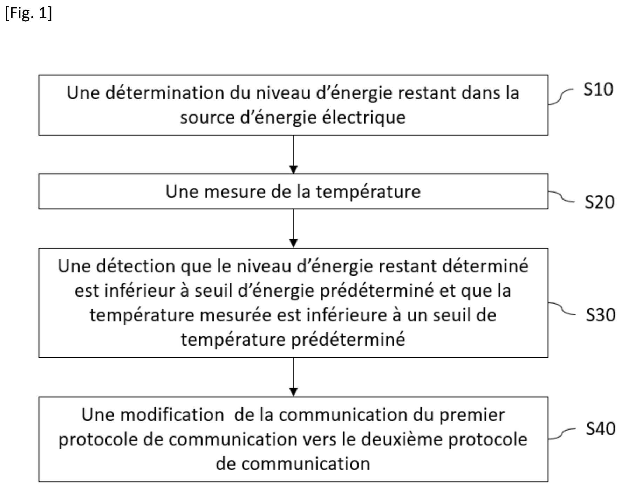

En référence à l'organigramme de la figure 1, on propose un procédé d'utilisation d'un identifiant portatif configuré pour communiquer avec un système de véhicule en utilisant un premier protocole de communication et un deuxième protocole de communication. L'identifiant portatif comprend une source d'énergie électrique. Le procédé comprend une détermination S10 du niveau d'énergie restant dans la source d'énergie électrique. Le procédé comprend une mesure S20 de la température. Le procédé comprend une détection S30 que le niveau d'énergie restant déterminé est inférieur à seuil d'énergie prédéterminé et que la température mesurée est inférieure à un seuil de température prédéterminé. Le procédé comprend, après la détection 530, une modification S40 de la communication du premier protocole de communication vers le deuxième protocole de communication. Le deuxième protocole de communication est configuré pour que la tension au borne de la source d'énergie électrique reste supérieure à un seuil de tension prédéterminé.

Le procédé améliore l'utilisation de l'identifiant portatif.

En effet, le procédé permet de réduire le risque de rupture de la communication entre l'identifiant portatif par le système. Une telle rupture peut notamment survenir lorsque la température est basse et que le niveau d'énergie disponible dans l'identifiant portatif devient insuffisant. En effet, dans une telle situation, la capacité réservoir de l'identifiant portatif peut être insuffisante pour la réalisation de plusieurs échanges UWB successifs entre le système et l'identifiant portatif, comme lors d'une localisation de l'identifiant portatif. Lorsque cela risque de se produire, le procédé modifie la communication pour qu'elle se fasse selon un deuxième protocole de communication dans lequel la tension au borne de la source d'énergie électrique reste supérieure à un seuil de tension prédéterminé. Avec ce deuxième protocole, tous les échanges UWB successifs sont donc réalisables et ce, malgré que la basse température et le faible niveau d'énergie. Le procédé permet donc de maintenir la communication entre l'identifiant portatif et le système, en évitant la rupture, par exemple de la localisation de l'identifiant portatif, qui risquerait de survenir autrement.

En particulier, le procédé permet de prendre en compte à la fois le niveau d'énergie restant et aussi la température mesurée, ce qui améliore la détection d'une situation à risque. En effet, un faible niveau d'énergie est particulièrement problématique lorsque la température devient basse. Le procédé permet donc d'assurer que le passage du premier au deuxième protocole intervient seulement lorsque le risque de rupture est réel. En d'autres termes, le procédé permet de maintenir le plus possible la communication en utilisant le premier protocole (plus complet), et ne réalise le passage vers le deuxième protocole (plus limité) qu'en cas de risque réel de rupture. En d'autres termes, le procédé permet d'ajuster dynamiquement le protocole de communication utilisé en fonction du niveau d'énergie restant, ce qui améliore au final la qualité globale de la communication.

Le procédé d'utilisation peut s'exécuter pendant qu'une communication UWB est en cours entre l'identifiant portatif et le système du véhicule. L'identifiant portatif et le système peuvent par exemple communiquer lorsque l'identifiant portatif se trouve dans un certain périmètre autour du véhicule, par exemple lorsque l'utilisateur portant l'identifiant portatif se trouve à l'intérieur du véhicule, ou lorsqu'il s'en approche ou s'en éloigne.

Une telle communication UWB peut comprendre des localisations successives, par exemple selon une certaine périodicité, de l'identifiant portatif par rapport au véhicule. Chacune de ces localisations peut comprendre des échanges UWB entre l'identifiant portatif et le système de véhicule. Initialement, c'est-à-dire avant l'exécution des étapes S10 à 540, le protocole de communication utilisé par la communication est le premier protocole de communication. Les localisations sont donc réalisées en utilisant le premier protocole de communication. Après l'exécution des étapes S10 à 540, la communication est modifiée, et le protocole de communication utilisé devient le deuxième protocole de communication. Les localisations sont donc réalisées en utilisant ce deuxième protocole de communication.

Le procédé d'utilisation peut comprendre une détermination de la position de l'identifiant portatif à partir des localisations qui ont été exécutées pendant la communication. Par exemple, l'exécution d'une localisation peut comprendre une fourniture d'une position relative de l'identifiant portatif par rapport au système UWB. En particulier, chaque localisation peut comprendre des échanges UWB entre l'identifiant portatif et plusieurs ancres (appelées aussi « capteurs ») UWB du système (par exemple toutes les ancres) pour déterminer les distances respectives entre l'identifiant portatif et chacune des ancres. Chaque localisation peut ensuite comprendre une détermination de la position relative de l'identifiant portatif par rapport au système UWB à partir des distances déterminées (la position correspondant par exemple à l'intersection de cercles tracés à partir des ancres et ayant comme diamètres les distances calculées).

Chaque distance avec une ancre peut être mesurée par un échange d'un signal UWB entre l'identifiant et l'ancre et un calcul d'un temps de vol entre l'identifiant et l'ancre pendant cet échange. Ce temps de vol peut être le temps mis par le signal échangé pour faire le trajet aller-retour entre l'identifiant et l'ancre. Le temps de vol peut être calculé par l'identifiant ou l'ancre, et peut être réalisé de n'importe quelle manière. Par exemple, chaque mesure peut comprendre des enregistrements des instants d'envoi et de réception du signal échangé, et le calcul peut se faire par déduction de ces enregistrement du temps pris par le signal pour faire le trajet aller/retour. Chaque mesure peut ensuite comprendre une déduction de la distance entre l'identifiant et l'ancre à partir de ce temps de vol. Par exemple, chaque mesure peut comprendre une multiplication d'une vitesse du signal avec le temps de vol calculé. La vitesse du signal peut par exemple être une vitesse prédéterminée et connue pour ce type de signal (par exemple enregistrée dans la mémoire de l'identifiant ou du système).

Les localisations successives réalisées pendant la communication peuvent permettre de déterminer en temps réel la position de l'identifiant portatif. Par exemple, chaque localisation peut fournir une position de l'identifiant portatif par rapport au système UWB à un instant donné, et l'ensemble des localisations exécutées peuvent fournir une évolution de sa position au cours du temps. Le procédé d'utilisation peut ainsi comprendre une détermination de l'évolution de la position de l'identifiants portatif à partir des localisations successives réalisées en utilisant le premier ou le deuxième protocole de communication.

Le procédé d'utilisation peut également comprendre une ou plusieurs utilisations des positions relatives de l'identifiant portatif déterminées. Par exemple, le procédé d'utilisation peut comprendre une activation d'une ou plusieurs fonctionnalité du véhicule en fonction de la position de l'identifiants portatif. Par exemple, la fonctionnalité peut comprendre une fermeture du véhicule lorsqu'il est déterminé que l'identifiant portatif se trouve à l'extérieur du véhicule, par exemple après écoulement d'une durée prédéterminée entre le moment où il est déterminé que l'identifiant portatif est à l'extérieur. Dans des exemples, la fonctionnalité peut comprendre un déverrouillage sélectif d'un ou plusieurs ouvrants du véhicule (par exemple une porte conducteur, une porte passager ou un coffre du véhicule) en fonction des positions relatives de l'identifiant portatif déterminées. Par exemple, la fonctionnalité peut comprendre un déverrouillage de la porte conducteur ou du coffre du véhicule lorsque l'identifiant portatif s'approche de la porte conducteur ou du coffre. Dans d'autres exemples encore, la fonctionnalité peut comprendre une activation d'une ou plusieurs fonctions du véhicule telles qu'un allumage de musique ou un réglage des rétroviseurs convenant à la personne portant l'identifiant portatif qui est positionné au niveau du siège conducteur. Le procédé d'utilisation peut comprendre toute combinaison de ces exemples de fonctionnalité.

Chaque étape du procédé est maintenant discutée plus en détail.

L'étape de détermination S10 du niveau d'énergie restant peut être exécutée par l'identifiant portatif. Dans un premier exemple, la détermination 510 du niveau d'énergie peut comprendre une mesure de la tension à vide de la batterie et de la tension en charge, puis un calcul de la résistance interne de la source d'énergie (par exemple la batterie) à partir de la différence entre ces deux tensions (par exemple en utilisant la formule U = E-r*I, donc en calculant r = (E-U)/I, avec E la tension à vide, U la tension en charge, r la résistance interne et I le courant de charge). La détermination S10 du niveau d'énergie peut ensuite comprendre une déduction du niveau d'énergie restant en fonction de la valeur de la résistance interne calculée. Dans un deuxième exemple alternativement, l'identifiant portatif peut comprendre un composant électronique configuré pour mesurer le niveau d'énergie restant dans la source d'énergie électrique, tel qu'un convertisseur de tension (appelé aussi « booster de tension »). Un tel composant peut par exemple être configuré pour fournir la quantité d'énergie (par exemple le nombre de mAh) qui a été consommée sur la source d'énergie électrique. Le niveau d'énergie restant peut ensuite être déduit de cette quantité d'énergie consommée, par exemple en soustrayant cette quantité d'énergie consommée d'une énergie totale disponible dans la source d'énergie avant consommation.

L'étape de mesure S20 de la température peut être exécutée par l'identifiant portatif. L'identifiant portatif peut comprendre un composant électronique configuré pour mesurer la température subie par l'identifiant portatif, soit par le composant UWB ou le composant BLE, soit en ajoutant un capteur de température. L'étape de mesure S20 peut comprendre une mesure de la température par ce capteur. Alternativement, cette étape peut être réalisée par le système de véhicule, par exemple avec un capteur de température placé dans le véhicule.

L'étape de détection S30 que le niveau d'énergie restant déterminé est inférieur au seuil d'énergie prédéterminé, et que la température mesurée est inférieure au seuil de température prédéterminé, peut être exécutée pendant que les étapes de détermination S10 du niveau d'énergie restant et de mesure 510 de la température sont réalisées. Les étapes de détermination S10 du niveau d'énergie restant et de mesure S10 de la température peuvent être réalisées en continu, par exemple à une certaine fréquence (identique ou différente), de sorte à fournir le niveau d'énergie restant et la température subie à chaque instant. A chaque nouvel mesure de température ou de niveau d'énergie restant, le procédé peut comprendre une comparaison de la nouvel mesure avec le seuil correspondant (seuil d'énergie pour le niveau d'énergie restant et seuil de température pour la température mesurée). Le procédé peut alors détecter S30 que le niveau d'énergie restant déterminé est inférieur à seuil d'énergie prédéterminé et que la température mesurée est inférieure à un seuil de température prédéterminé lorsque la comparaison indique que les nouvelles valeurs mesurées deviennent inférieures aux seuils prédéterminés.

Le seuil d'énergie peut représenter une quantité minimale d'énergie restante dans la source d'énergie. Par exemple, le seuil d'énergie peut être exprimé en pourcentage par rapport à la quantité maximale d'énergie qui peut être stockée dans la source d'énergie, et peut représenter un pourcentage minimal d'énergie restant, par exemple compris entre 50 et 75 %. Dans ce cas, l'énergie restante déterminée peut également être exprimée en pourcentage, par exemple par rapport à l'énergie maximale de la source d'énergie. Le seuil de température peut lui représenter une température minimale à ne pas dépasser. Le seuil de température peut par exemple être compris entre 10 et -10°C. Le seuil de température peut par exemple être égal à 0°C.

L'étape de détection S30 que le niveau d'énergie restant déterminé est inférieur au seuil d'énergie prédéterminé, et que la température mesurée est inférieure au seuil de température prédéterminé, peut être réalisée par l'identifiant portatif. Dans ce cas, l'identifiant portatif peut être configuré pour enregistrer les valeurs de niveau d'énergie restant et de température mesurées (par exemple en continu), par exemple sur une mémoire. Ensuite, l'identifiant portatif peut être configuré pour comparer ces valeurs avec les seuils d'énergie et de température prédéterminés. Alternativement, l'étape de détection S30 peut être réalisée par le système de véhicule. Dans ce cas, l'identifiant portatif peut être configuré pour envoyer les valeurs de niveau d'énergie restant et de température mesurées au système de véhicule, qui peut lui être configuré pour les comparer avec les seuils prédéterminés (après par exemple les avoir enregistrées sur une mémoire du véhicule).

L'étape de modification 540 est réalisée juste après l'étape de détection 530. En d'autres termes, lorsqu'il est détecté que le niveau d'énergie restant déterminé est inférieur au seuil d'énergie prédéterminé et que la température mesurée est inférieure au seuil de température prédéterminé, la modification vers le deuxième protocole est réalisée. Les localisations UWB entre le système et l'identifiant portatif peuvent alors ensuite être réalisées en utilisant ce deuxième protocole. La modification S40 peut être réalisée par l'identifiant portatif et/ou le système. La modification 540 peut comprendre un envoi, par l'identifiant portatif au système, d'un signal incluant par exemple la température mesurée et/ou le niveau d'énergie restant. La modification S40 peut ensuite comprendre une réception du signal envoyé par le système, et une sélection du deuxième protocole à mettre en place par le système, par exemple en fonction de la température mesurée et/ou le niveau d'énergie restant. Le système peut par exemple comprendre une mémoire sur laquelle est enregistrée une table de calibration. Cette table de calibration peut comprendre des paramètres de protocole de communication à appliquer en fonction de seuils de température et d'énergie. Par exemple, chaque ligne de la table peut comprendre un intervalle respectif pour les valeurs de température et de niveau d'énergie et des paramètres de protocole associés. La lecture peut comprendre une identification de la ligne correspondante en fonction des valeurs mesurées, et une déduction des paramètres à utiliser. Le procédé peut dans ce cas comprendre une détermination des paramètres du deuxième protocole de communication par lecture de la table de calibration. Ce deuxième protocole peut ensuite être envoyé à l'identifiant portatif pour utilisation.

Alternativement, l'identifiant portatif peut être configuré pour proposer un deuxième protocole au système. Dans ce cas, c'est l'identifiant portatif qui peut comprendre une mémoire sur laquelle est enregistrée la table de calibration précédemment discutée. L'identifiant portatif peut être configuré pour déterminer les paramètres du deuxième protocole de communication à utiliser par lecture de cette table de calibration (de la même manière que le système par exemple). Le signal envoyé par l'identifiant portatif peut alors comprendre les paramètres de ce deuxième protocole déterminés. La modification S40 peut alors comprendre ensuite une validation de cette proposition par le système, et l'envoi par exemple à l'identifiant portatif d'un message de validation du nouveau protocole proposé. Alternativement encore, à la fois le système et l'identifiant portatif peuvent avoir la table à disposition, et l'un peut par exemple ainsi vérifier la solution proposée par l'autre.

Le deuxième protocole de communication est configuré pour que la tension aux bornes de la source d'énergie électrique reste supérieure à un seuil de tension prédéterminé. Cela signifie que les paramètres de ce protocole permettent à la tension de la batterie de rester supérieure à ce seuil de tension, notamment à chaque localisation réalisée avec le système UWB du véhicule. L'énergie restante dans la source d'énergie est suffisante pour pouvoir réaliser chaque localisation sans que la tension devienne inférieure au seuil de tension prédéterminé.

Dans un premier exemple d'implémentation, le deuxième protocole peut réduire le nombre d'échanges UWB réalisées à chaque localisation. Par exemple, dans le premier protocole, chaque localisation peut comprendre des mesures de distances avec toutes les ancres du système, tandis que dans le deuxième protocole, chaque localisation peut comprendre des mesures avec un nombre inférieur d'ancres (par exemple au minimum deux), ce qui réduit le nombre d'échanges réalisés, et donc l'énergie utilisée. Chaque mesure de distance avec une ancre peut comprendre un envoi d'un signal par l'ancre à l'identifiant portatif, et donc une réception de ce signal par l'identifiant portatif. Dans le premier protocole, l'identifiant portatif peut réceptionner les signaux envoyés par toutes les ancres du système, tandis que dans le deuxième protocole, l'identifiant portatif peut n'écouter qu'un nombre restreint d'ancres du système (par exemple au moins deux), et donc ne réceptionner les signaux que de ce nombre restreint d'ancres. Les ancres écoutées peuvent être sélectionnées par l'identifiant portatif ou le système, et peuvent varier ou non à chaque localisation réalisée. Par exemple, le système peut suggérer des ancres à l'identifiant portatif en fonction de sa position, par exemple celle qui a été mesurée lors de la dernière localisation. Les ancres suggérées peuvent par exemple être celles qui se trouvent les plus éloignées de part et d'autre du véhicule par rapport à la position de l'identifiant portatif, ce qui permet de conserver une meilleure précision de mesure.

Dans un deuxième exemple d'implémentation, le deuxième protocole peut augmenter l'espacement temporel entre les échanges UWB de chaque localisation. Par exemple, chaque localisation peut comprendre des échanges de signaux successifs entre l'identifiant portatif et plusieurs ancres du système (par exemple toutes les ancres), et les échanges de signaux peuvent être plus espacés dans le deuxième protocole de communication que dans le premier. L'espacement temporel entre les échanges peut correspondre à l'intervalle de temps entre deux échanges successifs, c'est-à-dire entre l'instant de fin du premier et l'instant de début du deuxième. L'espacement temporel entre tous les échanges de la localisation peut être supérieur à une première durée dans le premier protocole, et supérieur à une deuxième durée dans le deuxième protocole, et la première durée peut être inférieure à la deuxième durée. L'espacement temporel entre tous les échanges de la localisation peut être dans le deuxième protocole supérieur ou égal à 4000µs par exemple. Cela permet d'espacer plus l'énergie utilisée, et donc de permettre à la tension dans la source d'énergie de remonter entre les différents échanges, et donc de rester au-dessus du seuil de tension prédéterminé.

Dans un troisième exemple d'implémentation, le deuxième protocole peut réduire la puissance d'émission de signaux par l'identifiant portatif. A chaque localisation, l'identifiant portatif peut envoyer des signaux au système et à chaque ancre du système, par exemple pour réaliser les mesures de distances. Dans le premier protocole, les signaux envoyés par l'identifiant portatif peuvent être envoyé avec un premier niveau de puissance, et dans le deuxième protocole, les signaux peuvent être envoyés avec un deuxième niveau de puissance inférieur au premier. Cela permet d'utiliser moins d'énergie à chaque signal envoyé, et donc de permettre à la tension de rester au-dessus du seuil de tension prédéterminé.

Dans des exemples, le procédé peut combiner n'importe lequel des premier, deuxième et troisième exemples d'implémentation discutés précédemment. Par exemple, le deuxième protocole peut à la fois réduire le nombre d'échanges UWB (comme dans le premier exemple d'implémentation) et augmenter l'espacement temporel entre ce nombre réduit d'échanges UWB (comme dans le deuxième exemple d'implémentation). Alternativement, le deuxième protocole peut à la fois réduire le nombre d'échanges UWB (comme dans le premier exemple d'implémentation) et réduire la puissance des signaux envoyés (comme dans le troisième exemple d'implémentation). Alternativement, le deuxième protocole peut à la fois augmenter l'espacement temporel entre les échanges UWB (comme dans le deuxième exemple d'implémentation) et réduire la puissance des signaux envoyés (comme dans le troisième exemple d'implémentation). Alternativement, le deuxième protocole peut faire à la fois réduire le nombre d'échanges UWB (comme dans le premier exemple d'implémentation), augmenter l'espacement temporel entre ce nombre réduit d'échanges UWB (comme dans le deuxième exemple d'implémentation) et réduire la puissance des signaux envoyés (comme dans le troisième exemple d'implémentation).

Dans des exemples, le système de véhicule peut avoir enregistré plusieurs identifiants portatifs. Dans ce cas, lorsqu'un utilisateur portant l'un de ces identifiants portatifs approche du véhicule, les étapes du procédé peuvent s'exécuter pour cet identifiant. Lorsqu'un autre des identifiants portatifs approche du véhicule (par exemple en étant porté par le même utilisateur ou par un autre utilisateur), le procédé peut se répéter pour cet autre identifiant.

La communication UWB peut se poursuivre, par exemple jusqu'à ce que l'utilisateur entre dans le véhicule ou allume le véhicule (par exemple allume le moteur du véhicule). A ce moment, la communication UWB peut varier. Par exemple, lorsque l'utilisateur entre dans le véhicule ou allume le véhicule, la fréquence des localisations peut diminuer.

La source d'énergie électrique peut être une pile. Par exemple, la source d'énergie électrique peut être une pile bouton. La pile peut avoir une grande capacité électrique, par exemple une capacité électrique supérieure à 320 mAh. La pile peut par exemple avoir une capacité électrique de 620 mAh. La pile peut être par exemple une pile bouton CR2450.

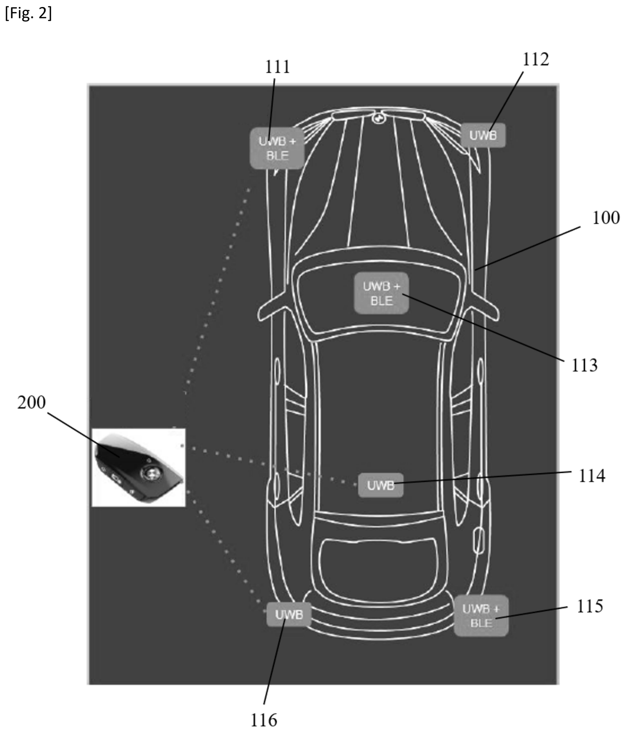

Des exemples vont maintenant être décrits en référence aux figures 2 à 13.

La [Fig. 2] illustre un exemple de système de véhicule 100 et d'identifiant portatif 200. Le système comprend des ancres 111, 112, 113, 114, 115 et 116 positionnées à différents endroits du véhicule 100. L'identifiant portatif 200 est dans cet exemple un porte-clés (traduction de l'anglais « keyfob »).

L'identifiant portatif et le système sont configurés pour communiquer ensemble, notamment localiser l'identifiant portatif 200 autour du véhicule 100. La communication entre l'identifiant portatif 200 et le système du véhicule comprend des localisations UWB successives de l'identifiant portatif 200 autour du véhicule 100 afin de calculer en temps réel la positon l'identifiant portatif 200 autour du véhicule 100. Chaque localisation UWB comprend des échanges UWB entre l'identifiant portatif 200 et les ancres 111, 112, 113, 114, 115 et 116 du système afin de déterminer les distances respectives entre l'identifiant portatif 200 et chacune des ancres 111, 112, 113, 114, 115 et 116. Chaque localisation comprend ensuite une détermination de la position relative de l'identifiant portatif 200 par rapport au système UWB à partir des distances déterminées avec chaque ancre 111, 112, 113, 114, 115 et 116.

Chaque distance avec une ancre est mesurée par un échange d'un signal UWB entre l'identifiant et l'ancre et un calcul d'un temps de vol entre l'identifiant et l'ancre pendant ces échanges. Ce temps de vol peut être le temps mis par le signal échangé pour faire le trajet aller-retour entre l'identifiant et l'ancre. Le temps de vol peut être calculé par l'identifiant, et peut être réalisé de n'importe quelle manière. Par exemple, chaque mesure peut comprendre des enregistrements des instants d'envoi et de réception du signal échangé, et le calcul peut se faire par déduction de ces enregistrements du temps pris par le signal pour faire le trajet aller/retour. Chaque mesure peut ensuite comprendre une déduction de la distance entre l'identifiant et l'ancre à partir de ce temps de vol. Les temps de vol peuvent par exemple être ensuite envoyés à toutes les ancres (par exemple en envoyant une même trame avec tous les temps de vol), et chaque ancre peut calculer la position de l'identifiant par rapport à elle-même à l'aide des temps de vol envoyés. Par exemple, chaque mesure peut comprendre une multiplication d'une vitesse du signal avec le temps de vol calculé. La vitesse du signal peut par exemple être une vitesse prédéterminée et connue pour ce type de signal (par exemple enregistrée dans la mémoire de l'identifiant ou du système). Toutes ces informations peuvent ensuite envoyées au calculateur principal, qui lui peut en déduire la position exacte de l'identifiant (par rapport au centre du véhicule).

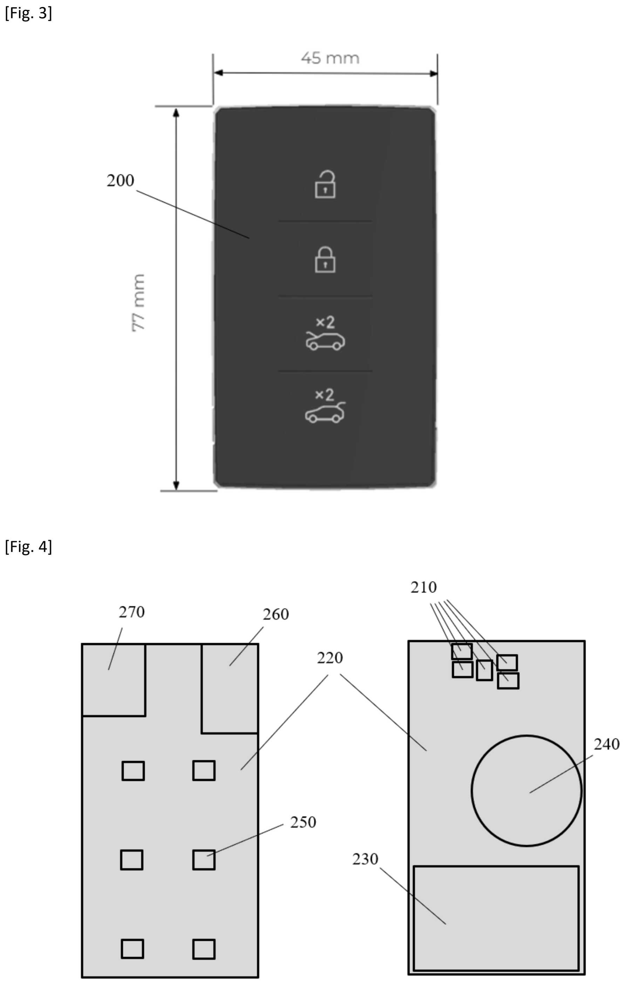

La [Fig. 3] montre un exemple de boîtier avec une largeur de 45 mm et une longueur de 77 mm. La [Fig. 4] illustre un exemple de circuit imprimé d'identifiant portatif, et en particulier les deux faces 201, 202 de ce circuit. Un tel circuit peut se trouver à l'intérieur du boîtier illustré sur la figure 3. Le circuit comprend des antennes 230, 270, 260, une pile 240 et six boutons 250. Lors de chaque localisation, l'énergie est prélevée dans une capacité réservoir composée de plusieurs condensateurs 210. Les dimensions d'un identifiant portatif étant limitées, l'espace disponible pour ces condensateurs 210 est restreint, ce qui réduit la capacité réservoir réalisable. Il n'est donc pas possible de résoudre le problème des échecs de localisation en augmentant la capacité du réservoir du boîtier. Par exemple, pour obtenir une capacité de réservoir de 430 µF avec des condensateurs CMS ayant chacun une capacité maximale de 47 µF, plus de 10 condensateurs seraient nécessaires (en tenant compte d'une dégradation de 25 %). Cependant, cela est impossible en raison des dimensions du boîtier. Les dimensions du boîtier peuvent par exemple être comprises entre 20 et 40 mm de largeur et 40 à 70 mm de longueur. L'identifiant portatif peut comprendre entre 2 et 5 condensateurs au maximum. Cela peut représenter une capacité réservoir comprise entre de 125 µF et 350 µF, par exemple entre 150 µF et 250 µF. La capacité réservoir peut par exemple être égale à 164 µF ou 250 µF. L'identifiant portatif ne peut contenir qu'un maximum de 5 condensateurs, et il n'est pas possible d'en ajouter davantage sans augmenter la taille du PCB, et donc celle du boîtier. Le procédé permet de pallier ce problème en réduisant le risque d'échec de localisation sans augmenter la taille du boîtier.

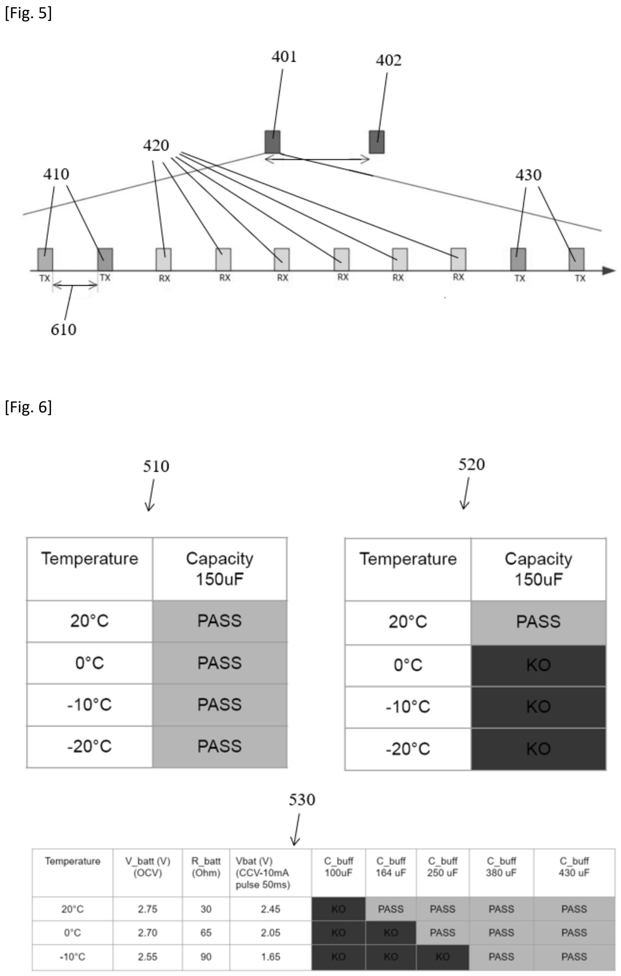

La [Fig. 5] illustre un exemple de communication entre le système de véhicule 100 et l'identifiant portatif 200 de la figure 2. La communication comprend des localisations UWB successives 401, 402 entre le système de véhicule 100 et l'identifiant portatif 200. Les localisations UWB successives 401, 402 sont réalisées sur cette figure en utilisant le premier protocole de communication.

Chaque localisation comprend des échanges UWB 410, 420, 430 afin de déterminer les distances respectives entre l'identifiant portatif et les ancres UWB du système et, une détermination de la position relative de l'identifiant portatif par rapport au système UWB à partir des distances déterminées. En particulier, la localisation comprend deux envois 410 d'une trame sur deux premiers créneaux temporels 410 depuis l'identifiant portatif UWB vers chacune des ancres UWB du système. La localisation comprend ensuite, successivement et sur un créneau temporel respectif, un envoi d'une trame 420 par chacune des ancres UWB (dans cette exemple, le système comprend 6 ancres, et 6 trames sont donc reçues par l'identifiant portatif). La localisation comprend ensuite deux envois 430 d'une trame sur deux derniers créneaux temporels depuis l'identifiant portatif UWB vers chacune des ancres UWB du système.

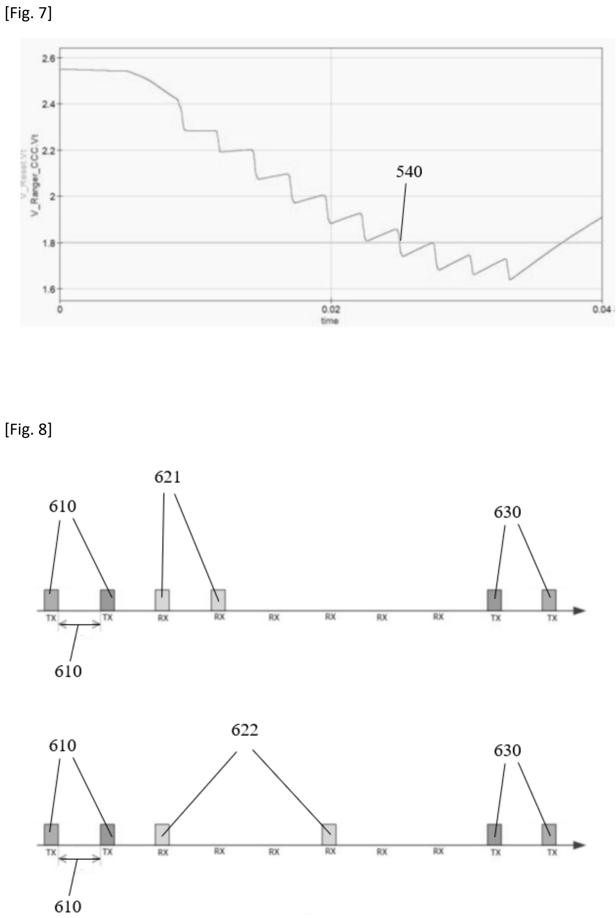

Les [Fig. 6] et [Fig. 7] illustrent des exemples de résultats. En particulier, la figure 6 montre des tables répertoriant les échecs de localisation lorsque le procédé d'utilisation n'est pas utilisé, c'est-à-dire lorsque les localisations sont réalisées selon le premier protocole uniquement. La table 510 montre les résultats obtenus lorsque la source d'énergie est pleine, la table 520 montre les résultats obtenus lorsque la source d'énergie est déchargée à 50% et la table montre les résultats obtenus lorsque la source d'énergie est déchargée à 80%. Les résultats montrent que, lorsque la source d'énergie est pleine, il n'y a pas d'échec de localisations (« PASS » pour toutes les températures sur la table 510). En revanche, lorsque la source d'énergie est déchargée à 50%, les localisations échouent lorsque la température devient inférieure à 0°C (« KO » pour les lignes de température 0°C, -10°C et -20°C sur la table 520). Lorsque la source d'énergie est déchargée à 80% (table 530), les résultats montrent que les localisations échouent à partir de -10°C lorsque la capacité réservoir est de 250 µF, à partir de 0°C lorsque la capacité réservoir est de 164 µF et à partir de 20°C lorsque la capacité réservoir est de 100 µF.

La figure 7 illustre un exemple de ces échecs de localisations réalisées en utilisant le premier protocole de communication lorsque la température est basse et que l'énergie restante est faible. En particulier, la figure montre l'évolution de la tension aux bornes de la source d'énergie pendant la localisation. L'évolution montre qu'initialement la tension est suffisante, mais qu'elle diminue à chaque échange réalisé, et qu'au bout du 7^{ème} échange 540, elle devient inférieure à 1.8V, ce qui entraine un échec de la localisation (les derniers échanges n'étant alors pas réalisés).

Le procédé permet d'éviter de tels échecs de localisation, en modifiant la communication vers le deuxième protocole de communication lorsque la température est basse et que l'énergie restante est faible afin que la tension aux bornes de la source d'énergie électrique reste supérieure à 1.8V pour que les localisations n'échouent pas.

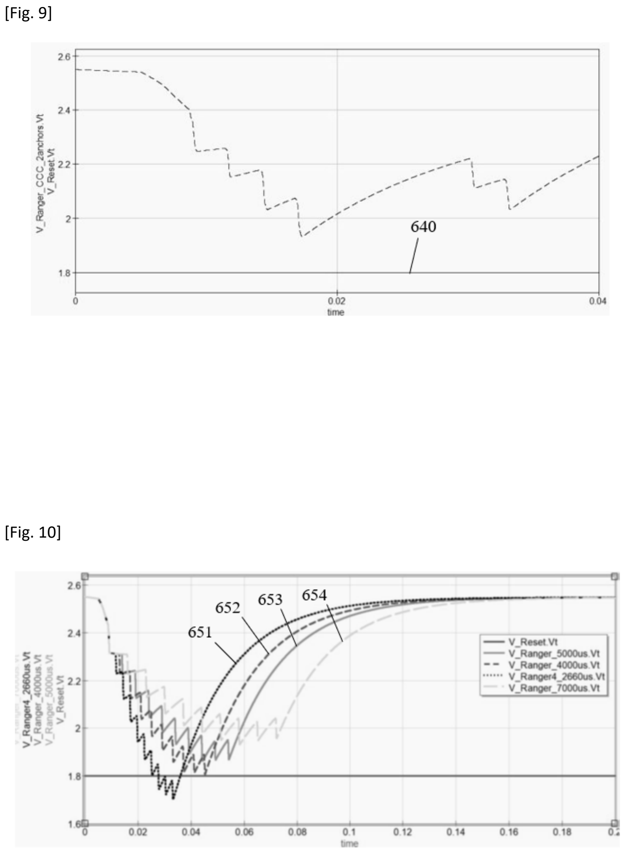

Les [Fig. 8], [Fig. 9] et [Fig. 10] illustrent des exemples de localisations réalisées en utilisant le deuxième protocole de communication.

En particulier, la figure 8 montre le premier exemple d'implémentation dans lequel le deuxième protocole réduit le nombre d'échanges UWB réalisées à chaque localisation. Dans cet exemple, chaque localisation réalisée dans le deuxième protocole comprend des mesures avec un nombre inférieur d'ancres (par exemple deux dans cet exemple), ce qui réduit le nombre d'échanges réalisés, et donc l'énergie utilisée. Comme dans le premier protocole, la localisation comprend initialement deux envois d'une trame sur deux premiers créneaux temporels 610 depuis l'identifiant portatif UWB vers chacune des ancres UWB du système. La localisation comprend ensuite, successivement et sur un créneau temporel respectif, un réception de trames envoyées par les ancres UWB. Dans le premier protocole, l'identifiant portatif peut réceptionner les signaux envoyés par toutes les ancres du système (comme illustré sur la figure 5). Dans le deuxième protocole en revanche, l'identifiant portatif n'écoute qu'un nombre restreint d'ancres (deux dans cet exemple), et donc ne réceptionne les signaux que de ces deux d'ancres 621, 622. Les ancres écoutées peuvent varier. Par exemple, dans le premier exemple, les deux premières ancres 621 sont écoutées, tandis que dans le deuxième, les première et quatrième ancres 622 sont écoutées. La localisation comprend ensuite deux envois 630 d'une trame sur deux derniers créneaux temporels depuis l'identifiant portatif UWB vers chacune des ancres UWB du système.

La figure 9 montre l'évolution de la tension aux bornes de la source d'énergie lorsque la localisation est réalisée dans le deuxième protocole de communication comme illustré sur la figure 8. La figure montre que la tension reste supérieure au seuil de tension de 1.8V 640. En effet, comme moins d'échanges sont réalisés, et qu'ils sont plus espacés, la tension ne descend plus en dessous de ce seuil.

La figure 10 illustre le deuxième exemple d'implémentation dans lequel le deuxième protocole augmente l'espacement temporel entre les échanges UWB de chaque localisation. Dans ce deuxième exemple, les échanges de signaux réalisés pendant chaque localisation sont plus espacés dans le deuxième protocole de communication que dans le premier. Cela permet d'espacer plus l'énergie utilisée, et donc de permettre à la tension dans la source d'énergie de remonter entre les différents échanges, et donc de rester au-dessus du seuil de tension prédéterminé. L'espacement temporel entre les échanges UWB d'une localisation est illustré sur la figure 8 et porte la référence 610. La figure 10 montre notamment l'évolution de la tension aux bornes de la source d'énergie lorsque l'espacement temporel n'est pas augmenté 651 (2660µs), et celles obtenues pour des augmentations d'espacement temporel à 4000µs 652, 5000µs 653 et 7000µs 654. Les résultats montrent que la tension aux bornes de la source d'énergie reste supérieure au seuil de tension de 1.8V lorsque l'espacement temporel est d'au moins 4000µs.

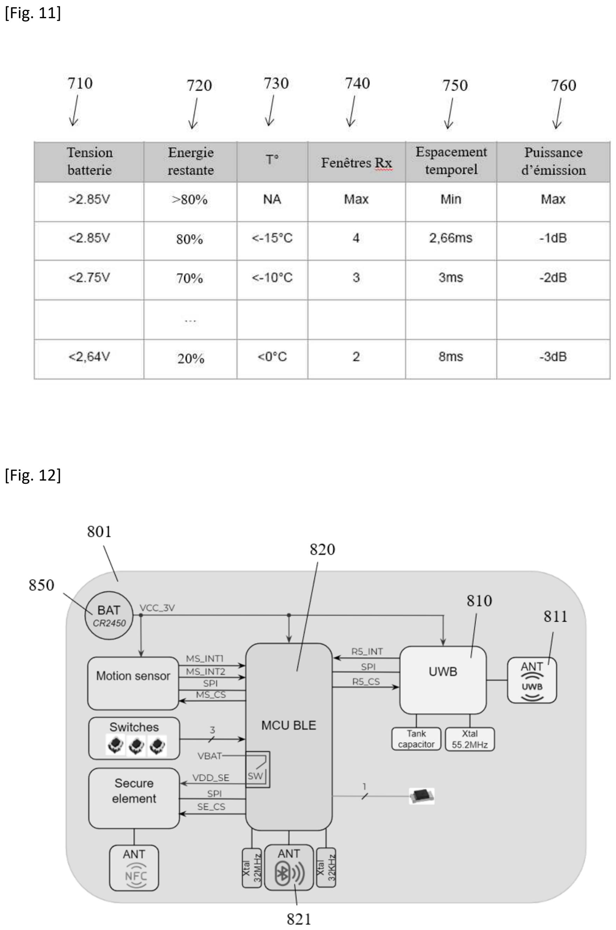

La [Fig. 11] montre un exemple de table de calibration. Une telle table peut être enregistrée sur une mémoire au niveau de l'identifiant portatif ou du système, et peut servir à sélectionner les paramètres du deuxième protocole à mettre en place en fonction de la température mesurée et/ou le niveau d'énergie restant. La table de calibration comprend des paramètres de protocole de communication à appliquer en fonction de seuils de température et d'énergie. Notamment, la table de calibration comprend des lignes correspondant à différentes situations, et des colonnes indiquant, pour chaque situation, les seuils de température et d'énergie restante 720, 730 correspondant, et les paramètres à appliquer, à savoir le nombre maximum d'ancres à écouter 730, l'espacement temporel minimal à appliquer 750 et/ou la puissance d'émission maximale à utiliser 760 pour le deuxième protocole de communication. La sélection des paramètres peut donc comprendre une identification de la ligne de la table correspondant à la situation actuelle grâce aux seuils de température et de décharge indiqués, puis une déduction des paramètres à appliquer par lecture des paramètres indiqués pour la ligne identifiée. La table peut également comprendre une première colonne 710 indiquant les tensions de la source d'énergie correspondant aux différentes décharges de la colonne 720. Grâce à cette premier colonne 710, il est possible de directement déduire la décharge correspondante en fonction de la tension mesurée (cette valeur étant mesurable plus facilement).

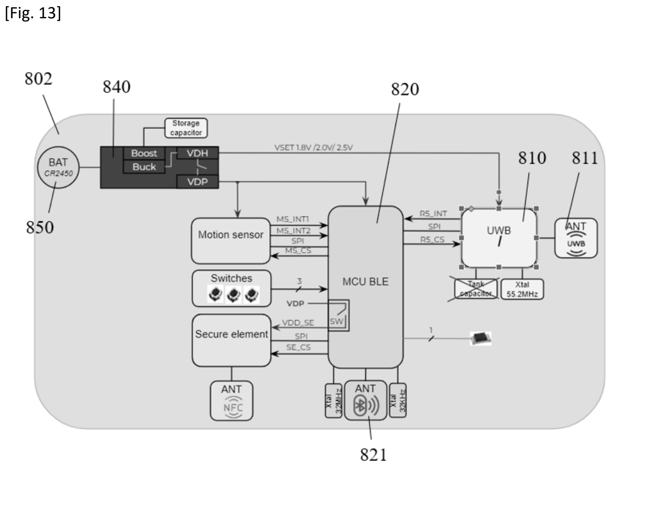

La [Fig. 12] illustre un premier exemple d'architecture 801 de l'identifiant portatif. L'architecture 800 comprend un composant UWB 810 et un composant BLE 820. L'architecture 800 comprend une antenne UWB 811 reliée au composant UWB 810. L'architecture 800 comprend une antenne BLE 821 reliée au composant BLE 820. L'architecture 800 comprend une pile 850 alimentant le composant UWB 810 et le composant BLE 820. Dans ce premier exemple, le niveau d'énergie peut être déterminé en calculant la résistance interne de la pile 850 à partir de mesures des tensions à vide et en charge, pour en déduire le niveau d'énergie restant comme expliqué précédemment. La [Fig. 13] illustre un deuxième exemple d'architecture 802. Dans ce deuxième exemple, l'identifiant portatif comprend également un convertisseur de tension 840 (appelé aussi « booster de tension »), et qui est configuré pour mesurer le niveau d'énergie restant dans la pile 850. Par exemple, ce composant peut être configuré pour fournir la quantité d'énergie (par exemple le nombre de mAh) qui a été consommée sur la source d'énergie électrique. Dans ce deuxième exemple, le niveau d'énergie restant peut donc être déduit de cette quantité d'énergie consommée. Alternativement, le niveau d'énergie restant peut être déduit en calculant la résistance interne de la pile 850 comme dans le premier exemple.

## Revendications

1. Procédé d'utilisation d'un identifiant portatif configuré pour communiquer avec un système de véhicule en utilisant un premier protocole de communication et un deuxième protocole de communication, l'identifiant portatif comprenant une source d'énergie électrique, le procédé comprenant :
• une détermination (S10) du niveau d'énergie restant dans la source d'énergie électrique ;
• une mesure (S20) de la température ;
• une détection (S30) que le niveau d'énergie restant déterminé est inférieur à seuil d'énergie prédéterminé et que la température mesurée est inférieure à un seuil de température prédéterminé ; et
• après la détection (S30), une modification (S40) de la communication du premier protocole de communication vers le deuxième protocole de communication, le deuxième protocole de communication étant configuré pour que la tension aux bornes de la source d'énergie électrique reste supérieure à un seuil de tension prédéterminé.

2. Procédé selon la revendication 1, dans lequel la communication comprend des localisations successives de l'identifiant portatif par rapport au véhicule, chaque localisation comprenant des échanges UWB entre l'identifiant portatif et le système de véhicule, les localisations étant réalisées, après la modification, en utilisant le deuxième protocole de communication.

3. Procédé selon la revendication 2, dans lequel les localisations réalisées en utilisant le deuxième protocole de communication comprennent moins d'échanges UWB que les localisations réalisées en utilisant le premier protocole de communication.

4. Procédé selon la revendication 3, dans lequel le système de véhicule comprend des ancres, les échanges UWB de chaque localisation comprenant des réceptions par l'identifiant portatif de signaux envoyés par les ancres du système, le nombre de signaux réceptionnés de chaque localisation réalisée en utilisant le deuxième protocole de communication étant inférieur au nombre de signaux réceptionnés de chaque localisation réalisée en utilisant le premier protocole de communication.

5. Procédé selon l'une des revendications 2 à 4, dans lequel l'espacement temporel entre les échanges UWB des localisations réalisées en utilisant le deuxième protocole de communication est supérieur à l'espacement temporel entre les échanges UWB des localisations réalisées en utilisant le premier protocole de communication.

6. Procédé selon l'une des revendications 2 à 5, dans lequel les échanges UWB de chaque localisation comprennent des émissions de signaux par l'identifiant portatif au système, la puissance des émissions du deuxième protocole étant inférieure à la puissance des émissions du premier protocole de communication.

7. Procédé selon l'une des revendications 2 à 6, dans lequel l'identifiant portatif et/ou le système comprennent en outre une mémoire sur laquelle est enregistrée une table de calibration, la table de calibration comprenant des paramètres de protocole de communication à appliquer en fonction de seuils de température et d'énergie, le procédé comprenant une détermination des paramètres du deuxième protocole de communication par lecture de la table de calibration.

8. Procédé selon l'une des revendications 2 à 7, dans lequel l'étape de mesure (520) de la température est réalisée par l'identifiant portatif ou par le système de véhicule.

9. Programme d'ordinateur pour identifiant portatif comprenant des instructions qui, lorsque le programme est exécuté par un processeur, conduisent celui-ci à mettre en œuvre le procédé selon l'une quelconque des revendications 1 à 8.

10. Support de stockage lisible par ordinateur sur lequel est enregistré le programme d'ordinateur selon la revendication 9.

11. Identifiant portatif comprenant le support de stockage selon la revendication 9, l'identifiant portatif étant configuré pour exécuter le procédé selon l'une quelconque des revendication 1 à 8.
